# DEMANDE DE BREVET EUROPEEN

(11) **EP 4 525 212 A1**
(43) Date de publication de la demande: **19.03.2025**
(21) Numéro de dépôt: 24198880.7
(22) Date de dépôt: 06.09.2024
(51) Int. Cl.: H01R 4/44, H01R 11/14, H02G 1/02

(54) **DISPOSITIF DE MISE A LA TERRE, DE MANIERE SIMULTANEE, DE DEUX CONDUCTEURS ELECTRIQUES ADJACENTS D'UNE INSTALLATION ELECTRIQUE**

(30) Priorité: 14.09.2023 FR 2309716
(71) Demandeur: Fameca, 68170 Rixheim (FR)
(72) Inventeur: SCHEIDT, Frédéric, 68440 Schlierbach (FR); HARLAY, Jean-Baptiste, 68200 Mulhouse (FR); CONSTANS, Christian, 68510 Waltenheim (FR)
(74) Mandataire: Cabinet Bleger-Rhein-Poupon

(57) **Abrégé**

L'invention concerne un dispositif de mise à la terre (6), de manière simultanée, de deux conducteurs électriques adjacents (2, 2' ; 2', 2") d'une installation électrique (1), ce dispositif (6) comporte un système de serrage (7) comportant, d'une part, une première mâchoire (8) configurée pour prendre appui contre un premier côté de chacun des deux conducteurs électriques adjacents (2, 2' ; 2', 2"), d'autre part, une deuxième mâchoire (9) configurée pour prendre appui contre un deuxième côté de chacun des deux conducteurs électriques adjacents (2, 2' ; 2', 2"), d'autre part encore, des moyens de montage (10) de la première mâchoire (8) et la deuxième mâchoire (9) de manière mobile l'une (8 ; 9) par rapport à l'autre (9 ; 8), et, d'autre part aussi, des moyens d'entraînement en déplacement (11) de la première mâchoire (8) et la deuxième mâchoire (9) l'une (8 ; 9) par rapport à l'autre (9 ; 8).

## Description

La présente invention concerne un dispositif de mise à la terre, de manière simultanée, de deux conducteurs électriques adjacents d'une installation électrique.

Cette invention concerne le domaine de la fabrication des dispositifs utilisés dans le cadre de la maintenance des installations électriques, plus particulièrement le domaine de la fabrication des dispositifs conçus pour assurer la mise à la terre des conducteurs électriques que comporte une installation électrique de moyenne ou de haute tension.

Sans n'y être aucunement limitée, cette invention trouvera une application particulièrement appropriée lorsqu'il s'agit de mettre à la terre une pluralité de conducteurs électriques, que comporte une installation électrique (notamment de moyenne ou de haute tension), et qui adoptent la forme de barres plates et parallèles.

L'on connaît, d'ores et déjà, des dispositifs de mise à la terre des conducteurs électriques d'une telle installation électrique. De tels dispositifs de mise à la terre comportent une pluralité de pinces qui, chacune, d'une part, est destinée à mettre à la terre l'un des conducteurs électriques de cette installation électrique, d'autre part, comporte deux mâchoires destinées à être resserrées sur l'un des conducteurs électriques et, d'autre part encore, est raccordée, directement ou par l'intermédiaire d'une autre pince, à un étau de mise à la terre, ceci par l'intermédiaire d'un câble électrique.

Lorsqu'une installation électrique comporte trois conducteurs électriques qui s'étendent sensiblement de manière parallèle (notamment lorsqu'il s'étendent dans un même plan), l'espacement défini entre deux conducteurs électriques adjacents ne permet pas toujours d'y engager une mâchoire d'une pince d'un dispositif de mise à la terre ce qui ne permet alors pas de serrer cette pince sur l'un des conducteurs électriques (notamment sur un conducteur électrique intermédiaire dans le cas de conducteurs électriques s'étendant dans un même plan) et donc de mettre ce conducteur électrique à la terre avec une telle pince. Pour mettre ce conducteur électrique (notamment intermédiaire) à la terre, il convient, alors, de recourir à un autre outil de mise à la terre dont on ne dispose pas toujours sur un chantier ou qu'il convient de prévoir lorsqu'on prépare un tel chantier ce qui complexifie la préparation et la réalisation de la mise à la terre de l'installation électrique.

Par le document FR 3 098 885 on connaît un dispositif de mise à la terre de manière simultanée de plusieurs fils parallèles d'une structure métallique. Ce dispositif comporte un système de serrage qui est configuré pour être serré de manière simultanée sur deux fils adjacents. Ce système de serrage comporte, d'une part, une première mâchoire positionnée d'un premier côté des deux fils adjacents et prenant appui contre ce premier côté de chacun des fils adjacents, d'autre part, une deuxième mâchoire positionnée d'un deuxième côté que comporte chacun des deux fils adjacents et prenant appui contre ce deuxième côté de chacun des deux fils adjacents, d'autre part encore, des moyens de montage de la première mâchoire et la deuxième mâchoire de manière mobile l'une par rapport à l'autre et, d'autre part aussi, des moyens d'entraînement en déplacement de la première mâchoire et la deuxième mâchoire l'une par rapport à l'autre pour le serrage de ces mâchoires de manière simultanée sur les deux fils adjacents.

Ces mâchoires comportent chacune une ouverture traversante avec un méplat tandis que les moyens de montage comportent une vis à tête oblongue, traversant les ouvertures traversantes des mâchoires, comportant un méplat coopérant avec les méplats des ouvertures traversantes des mâchoires et permettant uniquement une translation des mâchoires l'une par rapport à l'autre et par rapport à la vis ce qui réduit le degré de liberté de mouvement des mâchoires l'une par rapport à l'autre et complexifie la mise en place du dispositif de mise à la terre sur les fils. Les moyens d'entraînement en déplacement comportent la vis à tête oblongue et un écrou coopérant avec la vis à tête oblongue ainsi qu'avec une pince, qui comporte une ouverture traversante avec un méplat, qui est montée en translation sur la vis à tête oblongue, dont le méplat coopère avec le méplat de cette vis à tête oblongue, et qui est configurée pour être serrée sur un fil de masse interposé entre cette pince et l'une des mâchoires du dispositif de mise à la terre. Le serrage des mâchoires l'une sur l'autre est réalisé en actionnant l'écrou.

Ce dispositif de mise à la terre présente de nombreux inconvénients.

Tout d'abord, la mise en place de ce dispositif de mise à la terre sur la structure métallique nécessite une manipulation de ce dispositif en agissant sur la vis à tête oblongue ou sur l'une des mâchoires ce qui, d'une part, est malaisé et, d'autre part, est adapté lorsqu'il s'agit de mettre à la terre de manière définitive une structure métallique d'un bâtiment notamment lors de sa construction mais n'est aucunement adapté lorsqu'il s'agit de mettre à la terre des conducteurs électriques d'une installation électrique de moyenne tension ou de haute tension ceci dans le cadre d'une maintenance de cette installation car ce dispositif de mise à la terre ne permet aucunement d'assurer la sécurité d'un opérateur qui manipule ce dispositif de mise à la terre. De plus, le serrage des mâchoires l'une sur l'autre est réalisé en actionnant l'écrou ce qui, d'une part, nécessite une manipulation (notamment directe) de cet écrou par un opérateur ce qui ne permet pas d'assurer la sécurité de cet opérateur, d'autre part, ne permet pas à un opérateur d'intervenir à distance sur un tel écrou, notamment à une distance de sécurité permettant de garantir sa sécurité et, d'autre part encore, ne permet pas l'utilisation d'un outil, notamment isolé électriquement, ceci dans le cadre d'une maintenance d'une installation électrique de moyenne tension ou de haute tension.

La présente invention se veut à même de remédier, au moins en partie, aux inconvénients des dispositifs de mise à la terre de l'état de la technique.

A cet effet, l'invention concerne un dispositif de mise à la terre, de manière simultanée, de deux conducteurs électriques adjacents d'une installation électrique, ce dispositif de mise à la terre comporte un système de serrage, qui est configuré pour être serré de manière simultanée sur les deux conducteurs électriques adjacents, et qui comporte :
- d'une part, une première mâchoire qui est configurée pour être positionnée d'un premier côté que comporte chacun des deux conducteurs électriques adjacents et pour prendre appui contre ce premier côté de chacun des deux conducteurs électriques adjacents,
- d'autre part, une deuxième mâchoire qui est configurée pour être positionnée d'un deuxième côté que comporte chacun des deux conducteurs électriques adjacents et pour prendre appui contre ce deuxième côté (opposé au premier côté) de chacun des deux conducteurs électriques adjacents,
- d'autre part encore, des moyens de montage qui sont configurés pour monter la première mâchoire et la deuxième mâchoire de manière mobile l'une par rapport à l'autre, ces moyens de montage comportent une première ouverture traversante que comporte la première mâchoire ainsi qu'une deuxième ouverture traversante, que comporte la deuxième mâchoire et,
- d'autre part aussi, des moyens d'entraînement en déplacement qui sont configurés pour entraîner la première mâchoire et la deuxième mâchoire en déplacement l'une par rapport à l'autre, ceci en vue du serrage de ces mâchoires de manière simultanée sur les deux conducteurs électriques adjacents.

Ce dispositif de mise à la terre est caractérisé par le fait que :
- les moyens de montage comportent, encore, une tige, d'une part, qui traverse la première ouverture traversante et la deuxième ouverture traversante, d'autre part, qui est mobile par rapport à la première mâchoire, ceci en rotation et en translation, et, d'autre part encore, qui est mobile par rapport à la deuxième mâchoire, ceci en rotation ;
- les moyens d'entraînement en déplacement comportent, d'une part, la tige qui est filetée et, d'autre part, la première ouverture traversante, qui est taraudée, qui est traversée par ladite tige filetée, et qui coopère avec ladite tige filetée.

Selon une autre caractéristique, la première mâchoire adopte une forme allongée et présente, d'une part, une largeur qui est inférieure à un espacement défini entre les deux conducteurs électriques adjacents et, d'autre part, une longueur qui est supérieure audit espacement défini entre les deux conducteurs électriques adjacents.

Une autre caractéristique concerne le fait que la première mâchoire comporte des moyens de blocage en rotation qui sont configurés pour bloquer en rotation ladite première mâchoire par rapport aux deux conducteurs électriques adjacents.

Encore une autre caractéristique consiste en ce que la deuxième mâchoire présente des dimensions qui sont supérieures à l'espacement défini entre les deux conducteurs électriques adjacents.

Une caractéristique additionnelle concerne le fait que les moyens de montage comportent, d'une part, une tige qui est mobile par rapport à la première mâchoire et par rapport à la deuxième mâchoire, d'autre part, une première ouverture traversante, que comporte la première mâchoire, et qui est traversée par ladite tige et, d'autre part encore, une deuxième ouverture traversante, que comporte la deuxième mâchoire, et qui est traversée par ladite tige.

Encore une autre caractéristique consiste en ce que les moyens d'entraînement en déplacement comportent, d'une part, la tige qui est filetée et, d'autre part, la première ouverture traversante qui est taraudée, qui est traversée par ladite tige filetée, et qui coopère avec ladite tige filetée.

L'invention concerne, également, un ensemble électrique qui comporte, d'une part, une installation électrique, qui comporte au moins deux conducteurs électriques adjacents parallèles, et qui présente un espacement défini entre deux conducteurs électriques adjacents, d'autre part, un dispositif de mise à la terre qui présente les caractéristiques décrites ci-dessus.

L'invention concerne, encore, un procédé de mise à la terre, de manière simultanée, de deux conducteurs électriques adjacents d'une installation électrique, qui comporte une pluralité de connecteurs s'étendant de manière parallèle et selon un même plan, et qui présente un espacement déterminé entre les deux conducteurs électriques adjacents. Ce procédé est caractérisé par le fait que, d'une part, il est mis en oeuvre par l'intermédiaire du dispositif de mise à la terre qui présente les caractéristiques décrites ci-dessus et, d'autre part, qu'il comporte :
- une étape de raccordement qui consiste à raccorder à la terre le dispositif de mise à la terre ;
- une étape de répulsion qui consiste à repousser la première mâchoire du système de serrage du dispositif de mise à la terre à travers l'espacement déterminé entre les deux conducteurs électriques adjacents ;
- une étape de rotation qui consiste à assurer une rotation de la première mâchoire par rapport aux deux conducteurs électriques adjacents ;
- une étape de traction qui consiste à exercer une traction sur la première mâchoire, ceci en vue de faire prendre appui cette première mâchoire contre un premier côté de chacun des deux conducteurs électriques adjacents ;
- une étape d'entraînement qui consiste à entraîner en déplacement la deuxième mâchoire du système de serrage du dispositif de mise à la terre par rapport à la première mâchoire, ceci en vue d'assurer une prise d'appui, d'une part, de la première mâchoire contre le premier côté des deux conducteurs électriques adjacents et, d'autre part, de la deuxième mâchoire contre un deuxième côté des deux conducteurs électriques adjacents et, ainsi, un serrage de ces mâchoires sur les deux conducteurs électriques adjacents.

Ainsi, l'invention concerne un dispositif de mise à la terre qui comporte un système de serrage qui est configuré pour être serré de manière simultanée sur deux conducteurs électriques adjacents. Ce dispositif de mise à la terre permet, alors, avantageusement, de mettre à la terre les deux conducteurs électriques adjacents, ceci de manière simultanée, en une seule opération et avec un seul et unique dispositif de mise à la terre contrairement aux dispositifs de l'état de la technique qui nécessitent un dispositif de mise à la terre pour chaque conducteur électrique et le serrage de l'un de ces dispositifs de mise à la terre individuellement sur l'un de ces conducteurs électriques, ceci pour chacun des conducteurs électriques.

De plus et dans le cas d'une installation électrique qui comporte trois conducteurs électriques, la mise à la terre de ces trois conducteurs électriques peut, avantageusement, être réalisée en mettant ces conducteurs électriques à la terre deux par deux, ceci en utilisant uniquement deux dispositifs de mise à la terre conformes à l'invention et non plus trois (un par conducteur électrique) comme pour les dispositifs de mise à la terre de l'état de la technique.

Egalement et dans le cas d'une installation électrique qui comporte trois conducteurs électriques, la mise à la terre de ces trois conducteurs électriques s'opère, d'une part, par l'intermédiaire de deux dispositifs de mise à la terre conformes à l'invention, d'autre part, en resserrant un premier dispositif de mise à la terre sur un premier conducteur électrique d'extrémité ainsi que sur un conducteur électrique intermédiaire et, d'autre part, en resserrant un deuxième dispositif de mise à la terre sur le conducteur électrique intermédiaire ainsi que sur un deuxième conducteur électrique d'extrémité. En procédant de cette manière, les trois conducteurs électriques sont d'emblée raccordés électriquement entre eux de sorte qu'il est, avantageusement, possible de raccorder uniquement un seul des dispositifs de mise à la terre à un étau de mise à la terre, ceci par l'intermédiaire d'un unique câble électrique contrairement aux dispositifs de l'état de la technique qui nécessitent de raccorder tous les dispositifs de mise à le terre à un tel étau de mise à la terre, chacun par un câble électrique.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

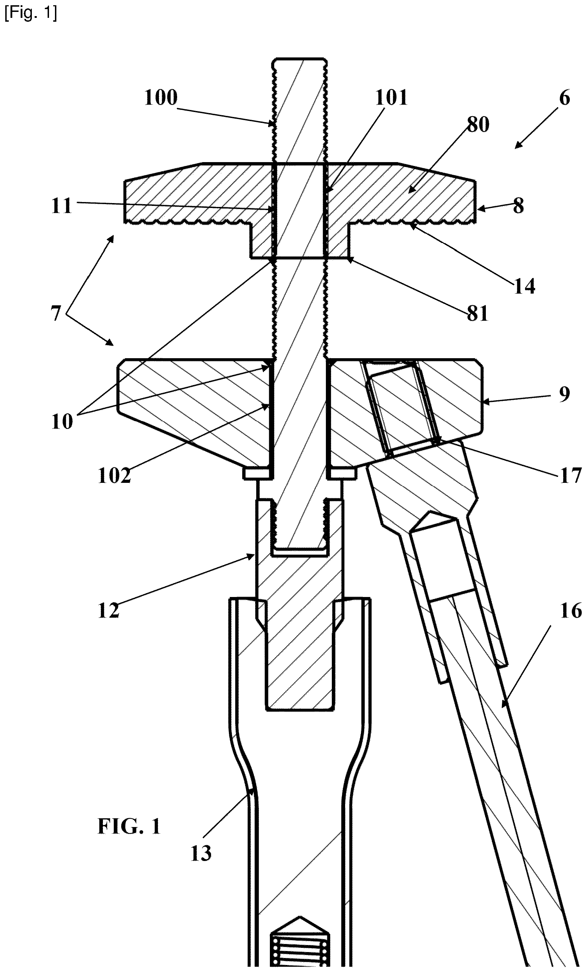

[Fig.1] représente une vue schématisée et en coupe d'un dispositif de mise à la terre conforme à l'invention.

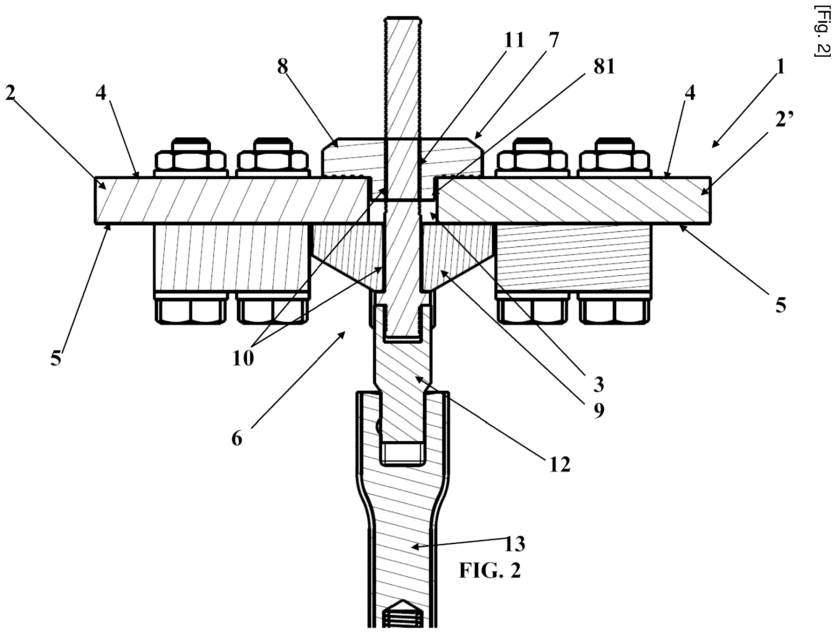

[Fig.2] représente une vue schématisée et de dessus d'un dispositif de mise à la terre, qui est conforme à l'invention, et qui est serré sur deux conducteurs électriques adjacents.

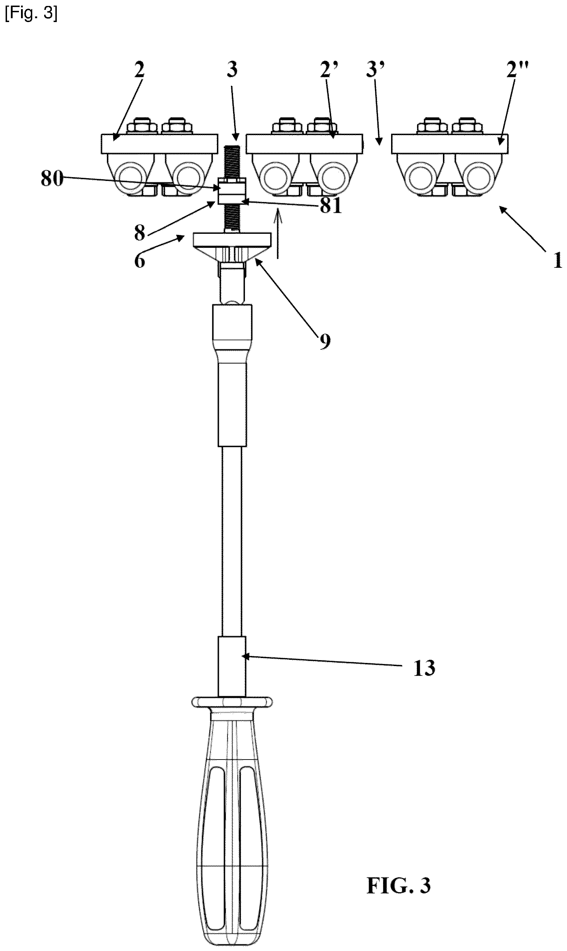

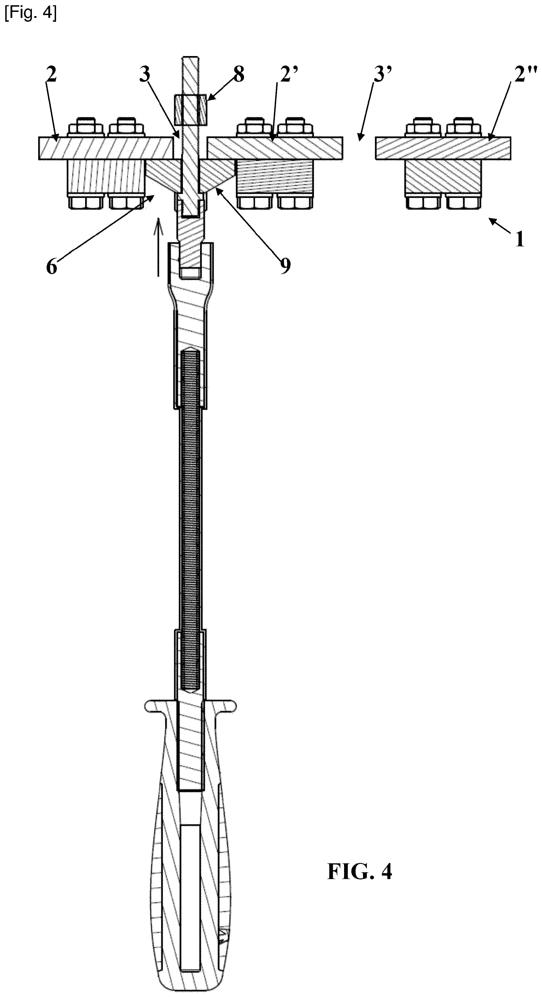

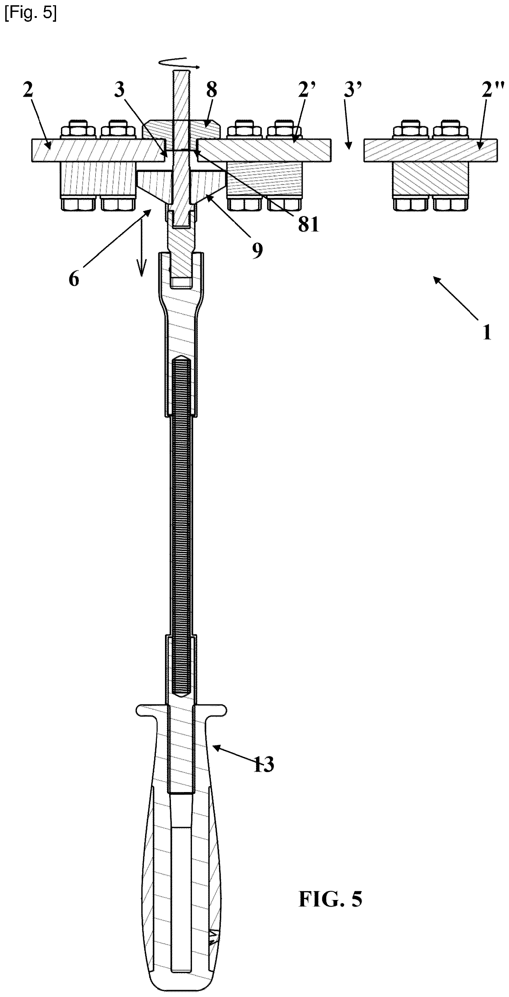

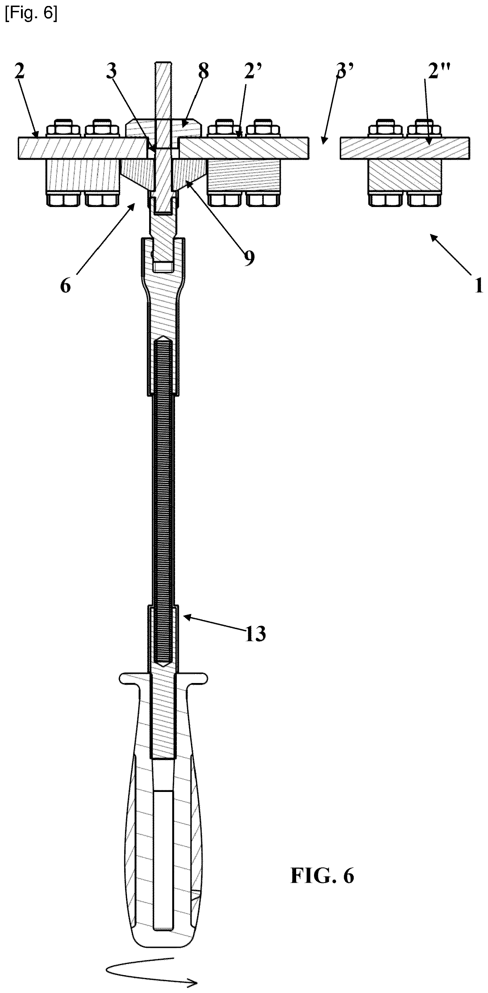

[Fig.3], [Fig.4], [Fig.5], [Fig.6] et [Fig.7] représentent des vues schématisées et de dessus des différentes étapes d'un procédé de la mise à la terre d'une installation électrique qui comporte trois conducteurs électriques parallèles, cette mise à la terre étant réalisée par l'intermédiaire de dispositifs de mise à la terre conformes à l'invention.

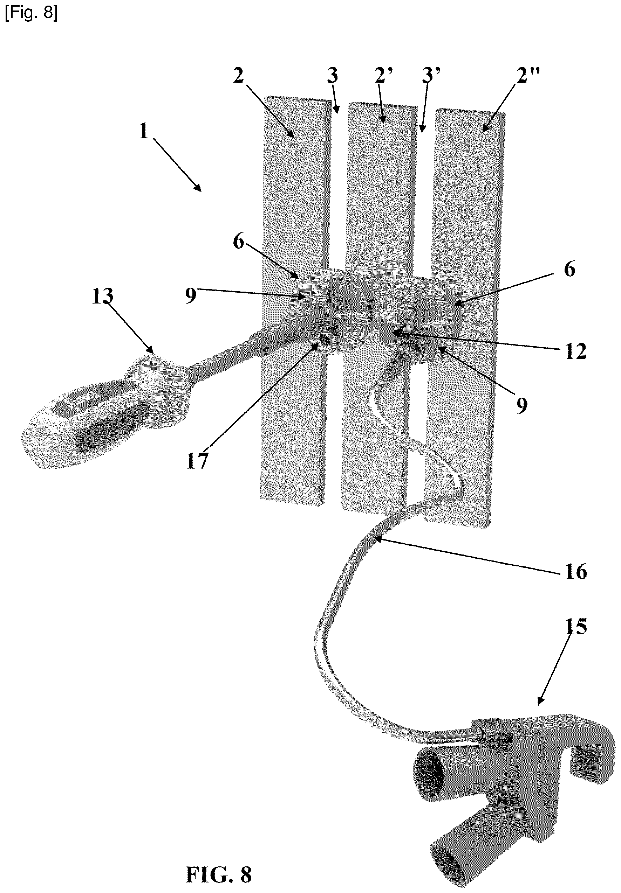

[Fig.8] représente une vue schématisée et en perspective de la mise à la terre d'une installation électrique comportant trois conducteurs électriques, ceci par l'intermédiaire de dispositifs de mise à la terre conformes à l'invention.

La présente invention concerne le domaine de la fabrication des dispositifs utilisés dans le cadre de la maintenance des installations électriques, plus particulièrement le domaine de la fabrication des dispositifs conçus pour assurer la mise à la terre des conducteurs électriques que comporte une installation électrique de moyenne ou de haute tension.

A ce propos, on observera qu'une telle installation électrique 1 comporte au moins deux conducteurs électriques parallèles et adjacents (2, 2', 2"), voire trois conducteurs électriques parallèles et adjacents (2, 2', 2"), ceci tel que visible sur les figures en annexe.

Une telle installation électrique 1 présente, alors, un espacement (3 ; 3") défini entre deux desdits conducteurs électriques adjacents (2, 2' ; 2', 2").

Dans une telle installation électrique 1, ces conducteurs électriques (2, 2', 2") peuvent s'étendre selon un même plan. Aussi et sans n'y être aucunement limitée, la présente invention trouvera une application particulièrement appropriée lorsqu'il s'agit de mettre à la terre de tels conducteurs électriques (2, 2', 2").

Selon une autre caractéristique, dans une telle installation électrique 1, les conducteurs électriques (2, 2', 2") peuvent être plats et/ou peuvent adopter la forme d'une bande ou d'une lame. Là encore et sans n'y être aucunement limitée, la présente invention trouvera une application particulièrement appropriée lorsqu'il s'agit de mettre à la terre de tels conducteurs électriques (2, 2', 2").

Quoi qu'il en soit, ces conducteurs électriques (2, 2', 2") présentent, d'une part, un premier côté 4 et, d'autre part, un deuxième côté 5 qui est opposé au premier côté 4.

L'invention concerne, alors, un dispositif de mise à la terre 6, de manière simultanée, de deux conducteurs électriques adjacents (2, 2' ; 2', 2") que comporte une telle installation électrique 1, plus particulièrement une installation électrique 1 de moyenne tension ou de haute tension.

Un tel dispositif de mise à la terre 1 comporte un système de serrage 7 qui est configuré pour être serré de manière simultanée sur les deux conducteurs électriques adjacents (2, 2' ; 2', 2").

Ce système de serrage 7 comporte, d'une part, une première mâchoire 8 qui est configurée pour être positionnée du premier côté 4 que comporte chacun des deux conducteurs électriques adjacents (2, 2' ; 2', 2") et pour prendre appui contre ce premier côté 4 de chacun des deux conducteurs électriques adjacents (2, 2' ; 2', 2").

D'autre part, ce système de serrage 7 comporte une deuxième mâchoire 9 qui est configurée pour être positionnée du deuxième côté 5 que comporte chacun des deux conducteurs électriques adjacents (2, 2' ; 2', 2") et pour prendre appui contre ce deuxième côté 5 de chacun des deux conducteurs électriques adjacents (2, 2' ; 2', 2").

D'autre part encore, ce système de serrage 7 comporte des moyens de montage 10 qui sont configurés pour monter la première mâchoire 8 et la deuxième mâchoire 9 de manière mobile l'une (8 ; 9) par rapport à l'autre (9 : 8).

D'autre part aussi, ce système de serrage 7 comporte des moyens d'entraînement en déplacement 11 qui sont configurés pour entraîner la première mâchoire 8 et la deuxième mâchoire 9 en déplacement l'une (8 ; 9) par rapport à l'autre (9 ; 8), ceci en vue du serrage de ces mâchoires (8 ; 9) de manière simultanée sur les deux conducteurs électriques adjacents (2, 2' ; 2', 2").

Tel que mentionné ci-dessus, le système de serrage 7 comporte une première mâchoire 8.

Cette première mâchoire 8 adopte une forme allongée et présente, d'une part, une largeur qui est inférieure à un espacement (3 ; 3') défini entre les deux conducteurs électriques adjacents (2, 2' ; 2', 2") et, d'autre part, une longueur qui est supérieure audit espacement (3 ; 3') défini entre les deux conducteurs électriques adjacents (2, 2' ; 2', 2").

Cette caractéristique permet, avantageusement, d'une part et lorsque cette première mâchoire 8 s'étend parallèlement aux deux conducteurs électriques adjacents (2, 2' ; 2', 2"), d'engager cette première mâchoire 8 à travers l'espacement (3 ; 3') défini entre ces deux conducteurs électriques adjacents (2, 2' ; 2', 2") et, d'autre part et lorsque cette première mâchoire 8 s'étend en formant un angle non nul (en particulier un angle droit) avec ces deux conducteurs électriques adjacents (2, 2' ; 2', 2"), d'empêcher que cette première mâchoire 8 soit engagée à travers cet espacement (3 ; 3') défini entre ces deux conducteurs électriques adjacents (2, 2' ; 2', 2"), ceci comme il sera décrit plus en détail ci-dessous.

En fait et tel que visible sur les figures en annexe, cette première mâchoire 8 comporte un barreau 80 qui présente une largeur et une longueur telles que définies ci-dessus. De manière particulière, un tel barreau 80 présente la forme d'un parallélépipède, plus particulièrement rectangle.

Selon une autre caractéristique, la première mâchoire 8 comporte des moyens de blocage en rotation 81 qui sont configurés pour bloquer en rotation ladite première mâchoire 8 par rapport aux deux conducteurs électriques adjacents (2, 2' ; 2', 2").

A ce propos, on observera que ces moyens de blocage en rotation 81 sont configurés pour bloquer en rotation ladite première mâchoire 8, ceci autour d'un axe de rotation qui est perpendiculaire à un plan selon lequel les deux conducteurs électriques adjacents s'étendent (2, 2', 2").

Selon un mode particulier de réalisation, ces moyens de blocage en rotation 81 comportent un plot qui présente une forme et/ou des dimensions qui sont configurées, d'une part, pour permettre son engagement à l'intérieur (voire au travers) de l'espacement (3 ; 3') défini entre les deux conducteurs électriques adjacents (2, 2' ; 2', 2") et, d'autre part, une fois positionné à l'intérieur de cet espacement (3 ; 3') et en cas de rotation (plus particulièrement de la première mâchoire 8), pour prendre appui contre ces deux conducteurs électriques adjacents (2, 2' ; 2', 2") et, ainsi, au moins limiter (voire empêcher) sa rotation.

A ce propos, on observera qu'un tel plot équipe le barreau 80 (que comporte la première mâchoire 8) et s'étend latéralement par rapport à ce barreau 80.

De manière alternative ou (et de préférence) additionnelle, ce plot présente une forme polygonale, de préférence carrée.

De manière alternative ou (et de préférence) additionnelle, ce plot présente des dimensions, plus particulièrement une longueur et/ou une largeur légèrement inférieure à l'espacement (3 ; 3') défini entre les deux conducteurs électriques adjacents (2, 2' ; 2', 2").

Tel que mentionné ci-dessus, le système de serrage 7 comporte une deuxième mâchoire 9.

Cette deuxième mâchoire 9 présente des dimensions (plus particulièrement un diamètre, une largeur et/ou une longueur) qui sont supérieures à l'espacement (3 ; 3') défini entre les deux conducteurs électriques adjacents (2, 2' ; 2', 2").

Tel que visible sur les figures en annexe, la deuxième mâchoire 9 peut présenter la forme d'un disque.

Tel que mentionné ci-dessus, le système de serrage 7 comporte des moyens de montage 10 de la première mâchoire 8 et la deuxième mâchoire 9 de manière mobile l'une (8 ; 9) par rapport à l'autre (9 : 8).

Ces moyens de montage 10 comportent, d'une part, une tige 100 qui est mobile par rapport à la première mâchoire 8 (ceci en rotation et en translation) ainsi que par rapport à la deuxième mâchoire 9 (ceci en rotation), d'autre part, une première ouverture traversante 101, que comporte la première mâchoire 8, et qui est traversée par ladite tige 100 et, d'autre part encore, une deuxième ouverture traversante 102, que comporte la deuxième mâchoire 9, et qui est traversée par ladite tige 100.

Tel que mentionné ci-dessus, le système de serrage 7 comporte des moyens d'entraînement en déplacement 11 de la première mâchoire 8 et de la deuxième mâchoire 9, ceci l'une (8 ; 9) par rapport à l'autre (9 ; 8).

Ces moyens d'entraînement en déplacement 11 comportent, d'une part, la tige 100, qui est mentionnée ci-dessus, et qui est filetée et, d'autre part, la première ouverture traversante 101, que comporte la première mâchoire 8, qui est mentionnée ci-dessus, qui est taraudée, qui est traversée par ladite tige filetée 100, et qui coopère avec ladite tige filetée 100 (plus particulièrement dont le taraudage coopère avec le filetage de la tige filetée 100).

Encore une autre caractéristique concerne le fait que le système de serrage 7 comporte, encore, des moyens d'accouplement 12 qui sont configurés pour accoupler les moyens d'entraînement en déplacement 11 (plus particulièrement la tige filetée 100) avec un outil de commande 13 (plus particulièrement un tournevis ou analogue) de ces moyens d'entraînement en déplacement 11, plus particulièrement avec un outil de commande 13 en rotation de la tige filetée 100 par rapport à la première mâchoire 8 ainsi que par rapport à la deuxième mâchoire 9. Un tel outil de commande 13 est, de préférence, isolé électriquement.

De tels moyens d'accouplement 12 peuvent adopter la forme d'un organe de manoeuvre (plus particulièrement un carré de manoeuvre) que comporte la tige filetée 100 ou la forme d'un embout à plusieurs pans (notamment à quatre pans) qui équipe la tige filetée 100.

Une caractéristique additionnelle concerne le fait qu'au moins la première mâchoire 8, respectivement la deuxième mâchoire 9, présente une surface, qui est orientée en direction de la deuxième mâchoire 9, respectivement de la première mâchoire 8, et qui comporte des moyens de friction 14.

De tels moyens de friction 14 peuvent adopter la forme de moyens d'accrochage, de nervures, de stries, de plots, de picots ou autres.

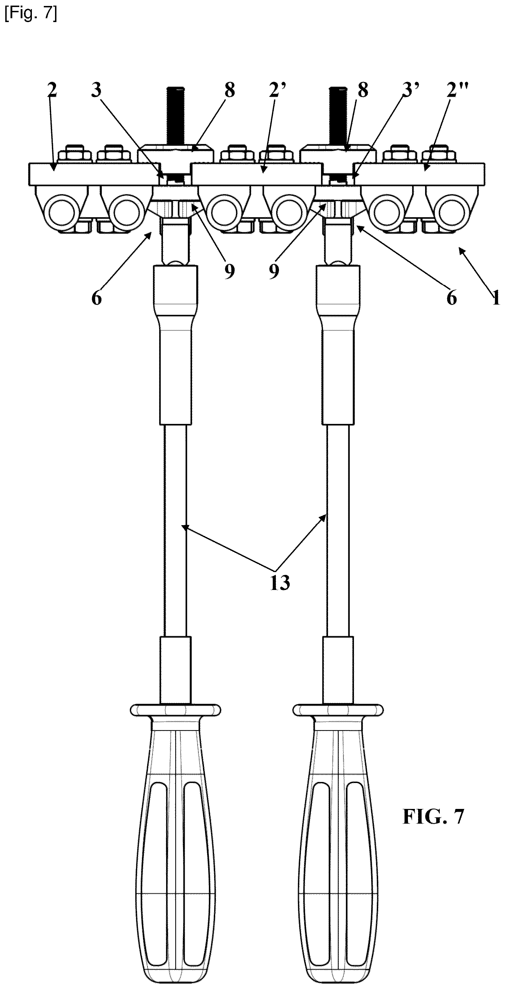

Selon une autre caractéristique du dispositif de mise à la terre 6 et tel que visible figure 7, celui-ci peut, encore, comporter, d'une part, un étau de mise à la terre 15 qui est configuré pour être serré sur une barre de terre ou sur un piquet de terre (non représenté) et, d'autre part, un câble électrique 16 qui raccorde le système de serrage 7 (plus particulièrement la deuxième mâchoire 9 de ce système de serrage 7) et l'étau de mise à la terre 15.

A ce propos, on observera que la deuxième mâchoire 9 peut, alors, comporter des moyens de réception 17 qui sont configurés pour recevoir un câble électrique 16 qui est configuré pour raccorder électriquement cette deuxième mâchoire 9 et ledit étau de mise à la terre 15.

Selon un mode particulier de réalisation, d'une part, de tels moyens de réception 17 peuvent adopter la forme d'un orifice taraudé et, d'autre part, le câble électrique 16 comporte un embout fileté qui est configuré pour coopérer avec ledit orifice taraudé.

L'invention concerne, également, un ensemble électrique qui comporte, d'une part, une installation électrique 1, qui présente les caractéristiques décrites ci-dessus, et qui comporte au moins deux conducteurs électriques (2, 2', 2") adjacents parallèles (notamment plats), plus particulièrement trois conducteurs électriques (2, 2', 2") adjacents parallèles (notamment plats) qui s'étendent selon un même plan.

Tel que mentionné ci-dessus, cette installation électrique 1 présente un espacement (3 ; 3') défini entre deux conducteurs électriques adjacents (2, 2' ; 2', 2"), plus particulièrement entre deux (2, 2' ; 2', 2") des trois conducteurs électriques (2, 2', 2") de cette installation électrique 1.

D'autre part, cet ensemble électrique comporte un dispositif de mise à la terre 6 qui présente les caractéristiques décrites ci-dessus.

L'invention concerne, également, un procédé de mise à la terre, de manière simultanée, de deux conducteurs électriques adjacents (2, 2' ; 2', 2") d'une installation électrique 1 (notamment de moyenne ou de haute tension), qui comporte une pluralité de connecteurs (2, 2', 2") s'étendant de manière parallèle et selon un même plan, et qui présente un espacement (3 ; 3') déterminé entre les deux conducteurs électriques adjacents (2, 2' ; 2', 2").

En fait, ce procédé de mise à la terre est caractérisé par le fait qu'il est mis en oeuvre par le dispositif de mise à la terre 6 qui présente les caractéristiques décrites ci-dessus.

De plus, ce procédé de mise à la terre comporte les étapes suivantes :
- une étape de raccordement qui consiste à raccorder à la terre le dispositif de mise à la terre 6, plus particulièrement en raccordant à la terre un étau de mise à la terre 15 auquel est raccordé un câble électrique 16 qui est raccordé à la deuxième mâchoire 9 du dispositif de mise à la terre 6 ;
- une étape de répulsion qui consiste à repousser (plus particulièrement selon une première direction) la première mâchoire 8 du système de serrage 7 du dispositif de mise à la terre 6, ceci à travers l'espacement (3 ; 3') déterminé entre les deux conducteurs électriques adjacents (2, 2' ; 2', 2") ;
- une étape de rotation qui consiste à assurer une rotation (notamment selon un angle non nul, plus particulièrement selon un angle de 90°, ceci autour d'un axe perpendiculaire à un plan selon lequel les deux conducteurs électriques adjacents 2, 2' ; 2', 2" s'étendent) de la première mâchoire 8 par rapport aux deux conducteurs électriques adjacents (2, 2' ; 2', 2") ;
- une étape de traction qui consiste à exercer une traction (plus particulièrement selon une deuxième direction qui est opposée à la première direction) sur la première mâchoire 8, ceci en vue de faire prendre appui cette première mâchoire 8 contre le premier côté 4 de chacun des deux conducteurs électriques adjacents (2, 2' ; 2', 2");
- une étape d'entraînement qui consiste à entraîner en déplacement (plus particulièrement par l'intermédiaire des moyens d'entraînement en déplacement 11) la deuxième mâchoire 9 du système de serrage 7 du dispositif de mise à la terre 6 par rapport à la première mâchoire 8, ceci en vue d'assurer une prise d'appui, d'une part, de la première mâchoire 8 contre le premier côté 4 des deux conducteurs électriques adjacents (2, 2' ; 2', 2") et, d'autre part, de la deuxième mâchoire 9 contre le deuxième côté 5 (opposé au premier côté 4) des deux conducteurs électriques adjacents (2, 2' ; 2', 2") et, ainsi, un serrage de ces mâchoires sur les deux conducteurs électriques adjacents (2, 2' ; 2', 2").

A ce propos, on observera que l'étape de répulsion et/ou l'étape de rotation et/ou l'étape de traction est mise en oeuvre en agissant sur la tige filetée 100, plus particulièrement par l'intermédiaire d'un outil de commande 13 tel que décrit ci-dessus.

On observera, également, que l'étape d'entraînement est mise en oeuvre en agissant sur la tige filetée 100 et consiste à entraîner en rotation cette tige filetée 100 (plus particulièrement par l'intermédiaire d'un outil de commande 13 tel que décrit ci-dessus) qui, sous l'effet de la rotation de cette tige filetée 100 et de la coopération de cette tige filetée 100 avec le taraudage de la première ouverture 101 de la première mâchoire 8 ainsi que de la prise d'appui de la première mâchoire 8 contre le premier côté 4 de chacun des deux conducteurs électriques adjacents (2, 2' ; 2', 2"), assure le déplacement (plus particulièrement en translation) de la deuxième mâchoire 9 par rapport à la première mâchoire 8, plus particulièrement en direction de cette première mâchoire 8.

De manière additionnelle, ce procédé de mise à la terre comporte, encore une étape de blocage qui consiste, après l'étape de rotation qui consiste à assurer une rotation de la première mâchoire 8, à bloquer en rotation la première mâchoire 8 par rapport aux deux conducteurs électriques adjacents (2, 2' ; 2', 2"), plus particulièrement par l'intermédiaire des moyens de blocage en rotation 81 mentionnés ci-dessus.

## Revendications

1. Dispositif de mise à la terre (6), de manière simultanée, de deux conducteurs électriques adjacents (2, 2' ; 2', 2") d'une installation électrique (1), ce dispositif de mise à la terre (6) comporte un système de serrage (7), qui est configuré pour être serré de manière simultanée sur les deux conducteurs électriques adjacents (2, 2' ; 2', 2"), et qui comporte :
- d'une part, une première mâchoire (8) qui est configurée pour être positionnée d'un premier côté (4) que comporte chacun des deux conducteurs électriques adjacents (2, 2' ; 2', 2") et pour prendre appui contre ce premier côté (4) de chacun des deux conducteurs électriques adjacents (2, 2' ; 2', 2"),
- d'autre part, une deuxième mâchoire (9) qui est configurée pour être positionnée d'un deuxième côté (5) que comporte chacun des deux conducteurs électriques adjacents (2, 2' ; 2', 2") et pour prendre appui contre ce deuxième côté (5) de chacun des deux conducteurs électriques adjacents (2, 2' ; 2', 2"),
- d'autre part encore, des moyens de montage (10) qui sont configurés pour monter la première mâchoire (8) et la deuxième mâchoire (9) de manière mobile l'une (8 ; 9) par rapport à l'autre (9 ; 8), ces moyens de montage (10) comportent une première ouverture traversante (101) que comporte la première mâchoire (8) ainsi qu'une deuxième ouverture traversante (102), que comporte la deuxième mâchoire (9) et,
- d'autre part aussi, des moyens d'entraînement en déplacement (11) qui sont configurés pour entraîner la première mâchoire (8) et la deuxième mâchoire (9) en déplacement l'une (8 ; 9) par rapport à l'autre (9 ; 8), ceci en vue du serrage de ces mâchoires (8 ; 9) de manière simultanée sur les deux conducteurs électriques adjacents (2, 2' ; 2', 2")
- **caractérisé par le fait que** :
- les moyens de montage (10) comportent, encore, une tige (100), d'une part, qui traverse la première ouverture traversante (101) et la deuxième ouverture traversante (102), d'autre part, qui est mobile par rapport à la première mâchoire (8), ceci en rotation et en translation, et, d'autre part encore, qui est mobile par rapport à la deuxième mâchoire (9), ceci en rotation ;
- les moyens d'entraînement en déplacement (11) comportent, d'une part, la tige (100) qui est filetée et, d'autre part, la première ouverture traversante (101), qui est taraudée, qui est traversée par ladite tige filetée (100), et qui coopère avec ladite tige filetée (100).

2. Dispositif de mise à la terre (6) selon la revendication 1 **caractérisé par le fait que** la première mâchoire (8) adopte une forme allongée et présente, d'une part, une largeur qui est inférieure à un espacement (3 ; 3') défini entre les deux conducteurs électriques adjacents (2, 2' ; 2', 2") et, d'autre part, une longueur qui est supérieure audit espacement (3 ; 3') défini entre les deux conducteurs électriques adjacents (2, 2' ; 2', 2").

3. Dispositif de mise à la terre (6) selon la revendication 1 ou la revendication 2 **caractérisé par le fait que** la première mâchoire (8) comporte des moyens de blocage en rotation (81) qui sont configurés pour bloquer en rotation ladite première mâchoire (8) par rapport aux deux conducteurs électriques adjacents (2, 2' ; 2', 2").

4. Dispositif de mise à la terre (6) selon la revendication 3, **caractérisé par le fait que** les moyens de blocage en rotation (81) comportent un plot qui présente une forme et/ou des dimensions qui sont configurées, d'une part, pour permettre son engagement à l'intérieur de l'espacement (3 ; 3') défini entre les deux conducteurs électriques adjacents (2, 2' ; 2', 2") et, d'autre part, une fois positionné à l'intérieur de cet espacement (3 ; 3') et en cas de rotation, pour prendre appui contre ces deux conducteurs électriques adjacents (2, 2' ; 2', 2") et, ainsi, au moins limiter sa rotation.

5. Dispositif de mise à la terre (6) selon la revendication 1, **caractérisé par le fait que** la deuxième mâchoire (9) présente des dimensions qui sont supérieures à un espacement (3 ; 3') défini entre les deux conducteurs électriques adjacents (2, 2' ; 2', 2").

6. Dispositif de mise à la terre (6) selon l'une quelconque des revendications précédentes, **caractérisé par le fait que** le système de serrage (7) comporte, encore, des moyens d'accouplement (12) qui sont configurés pour accoupler les moyens d'entraînement en déplacement (11) avec un outil de commande (13) de ces moyens d'entraînement en déplacement (11).

7. Dispositif de mise à la terre (6) selon l'une quelconque des revendications précédentes, **caractérisé par le fait qu'**au moins la première mâchoire (8), respectivement la deuxième mâchoire (9), présente une surface, qui est orientée en direction de la deuxième mâchoire (9), respectivement de la première mâchoire (8), et qui comporte des moyens de friction (14).

8. Dispositif de mise à la terre (6) selon l'une quelconque des revendications précédentes, **caractérisé en ce que** la deuxième mâchoire (9) comporte des moyens de réception (17) qui sont configurés pour recevoir un câble électrique (16) qui est configuré pour raccorder électriquement cette deuxième mâchoire (9) et un étau de mise à la terre (15).

9. Dispositif de mise à la terre (6) selon l'une quelconque des revendications 1 à 7, **caractérisé par le fait qu'**il comporte encore, d'une part, un étau de mise à la terre (15) et, d'autre part, un câble électrique (16) qui raccorde la deuxième mâchoire (9) et l'étau de mise à la terre (15).

10. Ensemble électrique qui comporte, d'une part, une installation électrique (1), qui comporte au moins deux conducteurs électriques adjacents parallèles (2, 2', 2"), et qui présente un espacement (3 ; 3') défini entre deux conducteurs électriques adjacents (2, 2' ; 2', 2"), d'autre part, un dispositif de mise à la terre (6) qui est conforme à l'une quelconque des revendications précédentes.

11. Procédé de mise à la terre, de manière simultanée, de deux conducteurs électriques adjacents (2, 2' ; 2', 2") d'une installation électrique (1 ) de moyenne ou de haute tension, qui comporte une pluralité de connecteurs (2, 2', 2") s'étendant de manière parallèle et selon un même plan, et qui présente un espacement (3 ; 3') déterminé entre les deux conducteurs électriques adjacents (2, 2' ; 2', 2"), ce procédé est **caractérisé par le fait que**, d'une part, il est mis en oeuvre par l'intermédiaire du dispositif de mise à la terre (6) selon l'une quelconque des revendications 1 à 9 et, d'autre part, qu'il comporte :
- une étape de raccordement qui consiste à raccorder à la terre le dispositif de mise à la terre (6) ;
- une étape de répulsion qui consiste à repousser la première mâchoire (8) du système de serrage (7) du dispositif de mise à la terre (6) à travers un espacement (3 ; 3') déterminé entre les deux conducteurs électriques adjacents (2, 2' ; 2', 2") ;
- une étape de rotation qui consiste à assurer une rotation de la première mâchoire (8) par rapport aux deux conducteurs électriques adjacents (2, 2' ; 2', 2") ;
- une étape de traction qui consiste à exercer une traction sur la première mâchoire (8), ceci en vue de faire prendre appui cette première mâchoire (8) contre le premier côté (4) de chacun des deux conducteurs électriques adjacents (2, 2' ; 2', 2") ;
- une étape d'entraînement qui consiste à entraîner en déplacement la deuxième mâchoire (9) du système de serrage (7) du dispositif de mise à la terre (6) par rapport à la première mâchoire (8), ceci en vue d'assurer une prise d'appui, d'une part, de la première mâchoire (8) contre le premier côté (4) des deux conducteurs électriques adjacents (2, 2' ; 2', 2") et, d'autre part, de la deuxième mâchoire (9) contre le deuxième côté (5) des deux conducteurs électriques adjacents (2, 2' ; 2', 2") et, ainsi, un serrage de ces mâchoires (8 ; 9) sur les deux conducteurs électriques adjacents (2, 2' ; 2', 2").

12. Procédé de mise à la terre selon la revendication 11, **caractérisé par le fait que** l'étape d'entraînement est mise en oeuvre en agissant sur une tige filetée (100) que comporte le dispositif de mise à la terre (6) et consiste à entraîner en rotation cette tige filetée (100) qui, sous l'effet de la rotation de cette tige filetée (100) et de la coopération de cette tige filetée (100) avec un taraudage que comporte une première ouverture (101) de la première mâchoire (8) ainsi que de la prise d'appui de la première mâchoire (8) contre le premier côté (4) de chacun des deux conducteurs électriques adjacents (2, 2' ; 2', 2"), assure le déplacement de la deuxième mâchoire (9) par rapport à la première mâchoire (8).

13. Procédé de mise à la terre selon la revendication 11, **caractérisé par le fait que**, après l'étape de rotation qui consiste à assurer une rotation de la première mâchoire (8), le procédé comporte une étape de blocage qui consiste à bloquer en rotation la première mâchoire (8) par rapport aux deux conducteurs électriques adjacents (2, 2' ; 2', 2")
